# EUROPEAN PATENT SPECIFICATION

(11) **EP 2 608 357 B1**
(45) Date of publication and mention of the grant of the patent: **23.07.2014**
(21) Application number: 11194360.1
(22) Date of filing: 19.12.2011
(51) Int. Cl.: H02J 13/00, H04B 3/54

(54) **Protecting against transients in a communication system**
Schutz vor Transienten in einem Kommunikationssystem
Protection contre les transitoires dans un système de communication

(43) Date of publication of application: 26.06.2013
(73) Proprietor: Vetco Gray Controls Limited, Bristol BS48 1BS (GB)
(72) Inventor: Puchianu, Silviu, Nailsea, Bristol BS48 1BS (GB); Simpson, Steven Lewis Charles, Nailsea, Bristol BS48 1BS (GB); Davis, Julian Richard, Nailsea, Bristol BS48 1BS (GB); Smart, Hilton, Nailsea, Bristol BS48 1BS (GB); Morley, Graham, Nailsea, Bristol BS48 1BS (GB)
(74) Representative: Newstead, Michael John

(56) References cited:
- WO-A1-01/03323
- US-A- 4 745 515
- US-A- 5 563 459
- US-A1- 2006 262 881
- HOVE M ET AL: "The Effect of Type of Transient Voltage Suppressor on the Signal Response of a Coupling Circuit for Power Line Communications", AFRICON, 2011, IEEE, 13 September 2011 (2011-09-13), pages 1-6, XP031989980, DOI: 10.1109/AFRCON.2011.6072050 ISBN: 978-1-61284-992-8

## Description

### Field of the Invention

This invention relates to protecting against transients in a communication system, for example in a subsea fluid production well power and communication system.

### Background of the Invention

In subsea fluid production well power and communication systems, the voltage transients inherently associated with power on/off switching of inductive loads are potentially very damaging, because communication modems are directly coupled (connected electrically) to power lines in order to implement communication on power (COP) systems. High voltage transients may damage topside and subsea modems used in COP-based communication systems and topside and subsea power distribution transformers.

WO 01/03323 A1 discloses a system having the pre-characterising features of claim 1 and a method having the pre-characterising features of claim 9.

"The Effect of Type of Transient Voltage Suppressor on the Signal Response of a Coupling Circuit for Power Line Communications", M. Hove, et al., IEEE Africon 2011, 13 September 2011, pages 1-6, ISBN: 978-1-61284-992-8, DOI: 10.1109/AFRICON.2011.6072050 discloses a power line communication system in which a modem is protected from transients using a surge protective device.

US-A- 5 563 459 discloses a method of switching capacitive or inductive loads to minimise the inrush or current by closing and opening switching contacts at a predetermined phase of the current cycle.

### Summary of the Invention

According to the invention from one aspect, there is provided a system for transmitting alternating current power and communication signals between a first location and a second location via a communication path which includes at least one inductive load and at least one switching means for switching power to said at least one load on and off, the system including control means adapted for controlling said at least one switching means characterised in that said control means is adapted so that, in response to switching off said power, a direct current is applied to said at least one inductive load and, in response to actuation of said at least one switching means to switch said power on, said power is switched on during a phase of the power which results in a magnetisation of said at least one inductive load opposite to that resulting from said direct current.

According to the invention from another aspect, there is provided a method for transmitting alternating current power and communication signals between a first location and a second location via a communication path which includes at least one inductive load and at least one switching means for switching power to said at least one load on and off, the method comprising controlling said at least one switching means, the method being characterised in that, in response to switching off said power, a direct current is applied to said at least one inductive load and, in response to actuation of said at least one switching means to switch said power on, said power is switched on during a phase of the power which results in a magnetisation of said at least one inductive load opposite to that resulting from said direct current.

At least one such inductive load could be at said first location.

At least one such inductive load could be at said second location.

At least one such switching means could be at said first location.

At least one such switching means is at said second location.

Said at least one inductive load typically comprises a winding of a transformer.

A system according to the invention typically comprises a power and communication system for a subsea well and a method according to the invention typically is performed in such a system. In these cases, typically said first location is a topside location and said second location comprises a subsea electronics module.

### Brief Description of the Drawings

Fig. 1 is a schematic diagram of a typical power and communication system for a subsea fluid production well;
Fig. 2 is a schematic diagram of another such power and communication system;
Fig. 3 is derived from oscilloscope traces for illustrating transient problems;
Fig. 4 is a schematic diagram of a first embodiment of a system according to the invention; and
Fig. 5 is a schematic diagram of part of a second embodiment of a system according to the invention.

### Detailed Description of the Invention

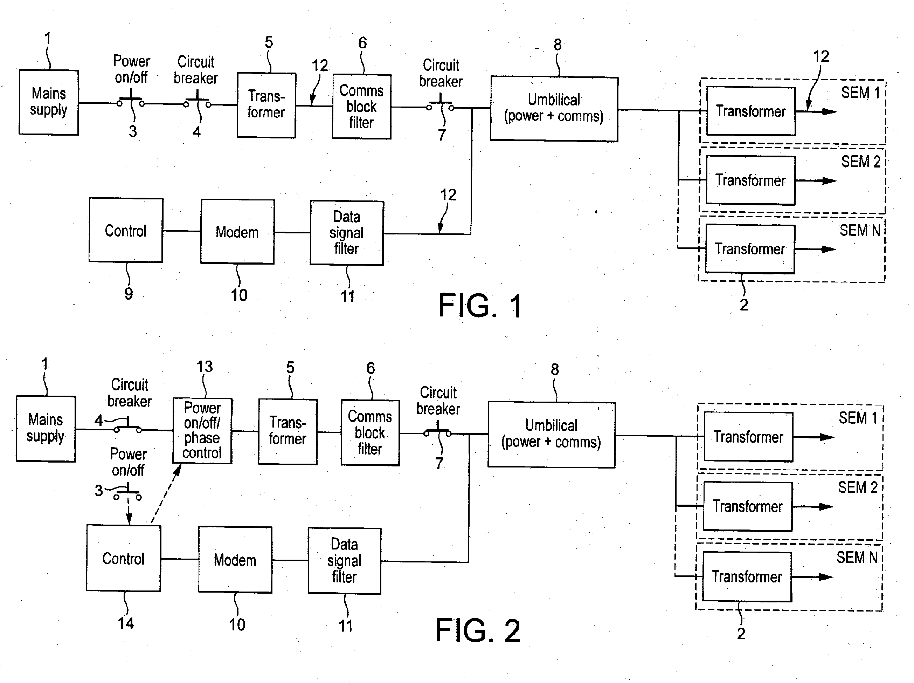

Fig. 1 shows a typical COP-based control system for a subsea fluid (e.g. hydrocarbon) production well in which topside alternating current (AC) mains power from a mains supply 1 (e.g. on a surface platform) is supplied to transformers 2 in subsea electronics modules SEM1, SEM2 -- SEMN at respective fluid production wells, via a power on/off switch 3, a circuit breaker 4, a topside transformer 5, a communications blocking filter 6, a circuit breaker 7 and an umbilical cable 8 between topside and the subsea wells. Control communications are superimposed under the control of control electronics 9 on to the AC power, after the circuit breaker 7, by a modem 10 and a data signal filter 11. When the power on/off switch 3 or a circuit breaker 4 or 7 is operated, high voltage transients occur at points 12 of the system, which are the result of reactive power being rapidly discharged within the system. The remanant magnetic energy, stored in inductive elements (transformers and inductors) is rapidly discharged through the system and high transient inrush currents occur, with potentially catastrophic consequences.

In Fig. 2 (in which items which correspond with those in Fig. 1 have the same reference numerals as in Fig. 1), power switching in the system is changed by replacing the simple on/off switch 3 by a phase-controlled power on/off switch 13, the action of switch 3 now being via control electronics 14 which control the switch 13 as well as modem 10 and filter 11. More particularly, switch 13 switches power at a controlled phase angle of the voltage waveform, typically via a thyristor or triac. Switching of power on and off is phase-controlled to ensure that the downstream load is powered up on the opposite phase of the supply to that when powered off. For example, if the system is powered on at, as an example, the positive power half cycle of the power, it is always powered off in the negative power half cycle, thus ensuring the delivery of an equal number of positive and negative power half cycles to the load, thereby leaving the downstream magnetic components with a residual magnetic field that should suppress (rather than enhance) the inrush current transient surge generation when the system is next powered on (with the appropriate phase-synchronised power control).

The reason for this process is that switching off the power supply to a transformer results in, typically, a residual magnetic flux stored in the core. If the power is switched on at a part of the AC supply cycle polarity that enhances this flux, then the transformer may go into saturation, resulting in a large input current, and, as there is no longer a change of core flux and thus no back electromotive force (EMF), it is only limited by the resistance of the winding. This high current typically results in severe distortion or collapse of the supply voltage with the rapid change of supply voltage generating harmonics whose frequencies can encroach on the communication band of a COP system and corrupt communications. This, along with potential damage that can be caused by the high inrush currents, can be catastrophic.

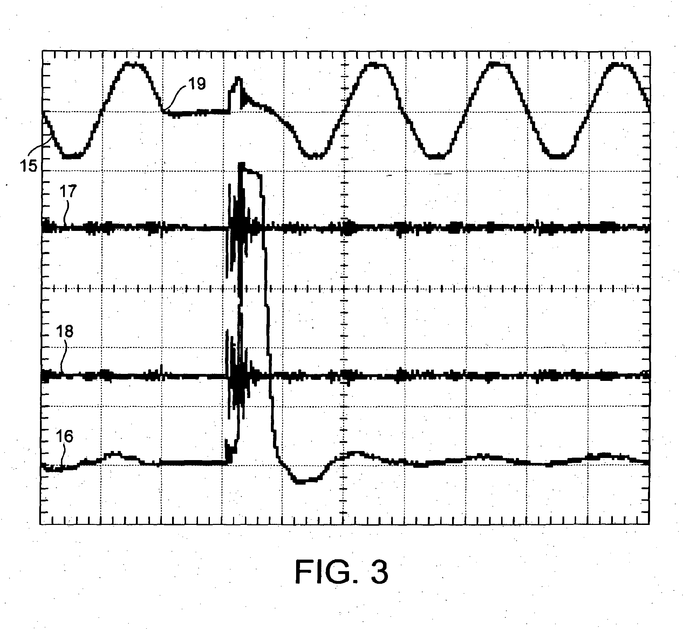

Fig 3. is derived from actual oscilloscope traces recorded during power on/off tests on a SEM transformer that demonstrates this phenomenon and shows a voltage (trace 15) applied to a primary winding of the transformer, the current (trace 16) in the primary winding, a COP system communication output (trace17) and a complement (trace 18) of trace 17. The phase point 19 in trace 15 where power is switched on is at the beginning of a negative cycle. It can be seen that there is a large current in the primary winding (trace 16) and a collapse of the supply voltage (trace 15) which has generated harmonics which have resulted in noise bursts in the COP communication channel (traces 17 and 18).

One alternative, simple way to avoid the transients problem is to have a larger core to the transformer so that it will not go into saturation, but this is not an option in subsea equipment where minimisation of mass and volume is essential. The above method of this invention, of ensuring that power on and off is phase-controlled, to ensure that the downstream load is powered up on the opposite phase of the supply to that when powered off, allows retention of transformers with low mass and volume without the risk of transients causing damage and COP communication corruption.

The above solution of the transient problem can, however, be augmented (according to an embodiment of the invention) since, if a circuit breaker opens, or the power is unintentionally cut for any other reason, the power off will not be phase-controlled, and thus the required inverse phase at re-switching on will not be known. This can be dealt with by the addition of pre-magnetisation of the transformers. This technique involves applying, temporarily, a small DC voltage to the primary winding of each transformer to set its core remanence in a known direction. This provides knowledge of the phase of the restored AC power required to 'oppose' this remanent flux, thus avoiding application of power at a phase which will drive the core flux into saturation and cause transient problems.

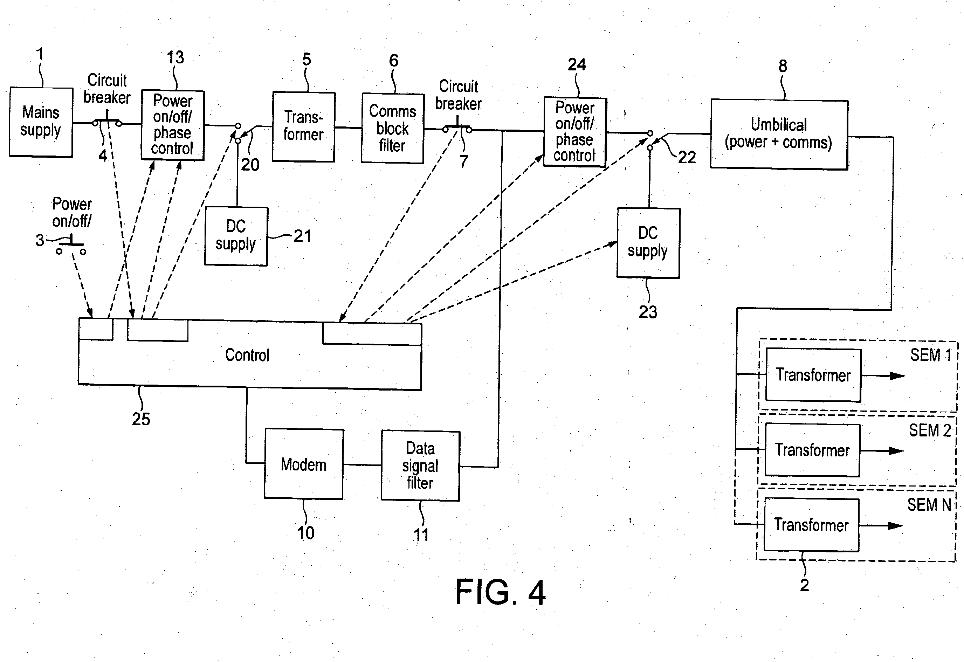

Fig. 4 (in which items which correspond with those in Fig. 2 have the same reference numerals as in Fig. 2) shows the application of this feature to the topside transformer 5. If the circuit breaker 4 opens, a switch 20 between phase-controlled switch 13 and transformer 5 operates for a short period of time and connects a DC supply circuit 21 (typically providing only 9 volts or so) to the primary winding of the transformer 5, thus setting its core remanence in a known direction, dependent on the polarity of the DC supply applied. Following this, the power on/off phase controlled switch 13, is set to apply, when the circuit breaker 4, is reset, the first AC supply phase required to reverse the remanence set by the DC supply circuit 20, thus ensuring that the core of transformer 5 does not go into saturation and thus preventing the problem of high inrush current, supply voltage collapse and corruption of the COP communication which arises without the pre-magnetisation technique.

As shown in Fig. 4, the same technique is applied to the subsea transformers 2 housed in the SEMs 1 to N with the DC supply pre-magnetisation applied to all the SEM transformers from the topside via the umbilical cable 8. Thus, opening of the circuit breaker 7 (or circuit breaker 4) causes a switch 22 to operate, momentarily connecting a DC supply circuit 23 to the transformers 2 of SEMs 1 to N, followed by the setting of a power on/off phase-controlled switch 24 to apply the correct phase of the AC supply, when re-connected to the transformers, i.e. to reverse the remanent flux in the transformer cores previously pre-set by the DC supply at power off.

The above is effected under the control of topside control electronics 25 acted on by switch 3 and circuit breakers 4 and 7 and connected to control switches 13, 20, 22 and 24.

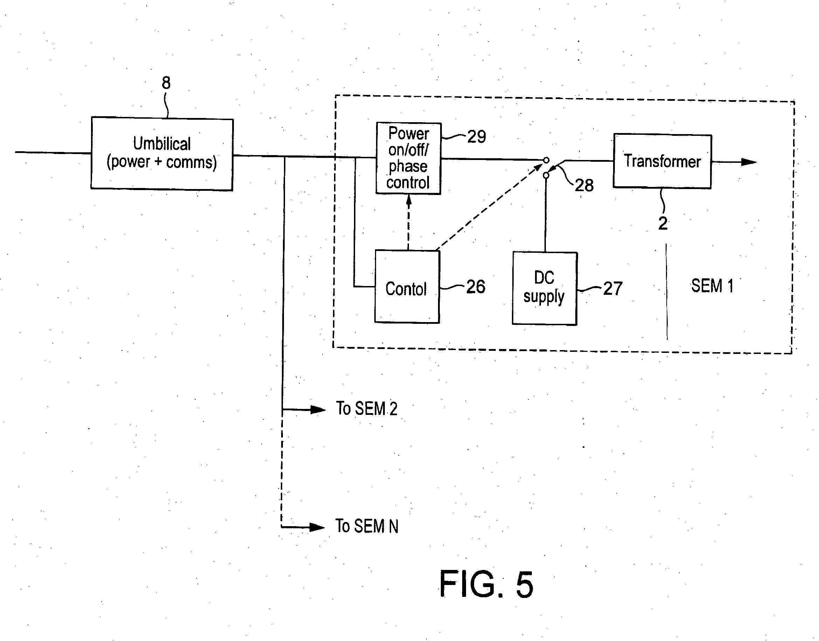

Fig. 5 shows an alternative arrangement to pre-magnetise the transformers in the SEMs by incorporating the required circuitry, power-on phasing and control within each SEM, subsea. In this case in each SEM respectively, control electronics 26 in the SEM will have to have its power supply sustained for a few seconds when the incoming power via the umbilical 8 is switched off, and also contain circuitry to detect switch-off of power, whereupon a DC supply circuit 27 (typically receiving power from the control electronics power supply) is momentarily connected to the transformer 2 by a switch 28. At power restoration via the umbilical 8, a power on/off phase-controlled switch 29 (typically a triac or thyristors) will not restore power to the transformer until the control electronics 26 allows it to switch on at the correct phase of the AC supply.

### Advantages of using the Invention

The key advantage is that this invention allows the use of transformers with flux densities that are close to saturation and therefore low volume and mass, in subsea power systems with COP communications without the problems of system component damage such as modems and corruption of communications when the power supply is switched off or on.

## Claims

1. A system for transmitting alternating current power and communication signals between a first location and a second location via a communication path which includes at least one inductive load (5 or 2) and at least one switching means (13 or 29) for switching power to said at least one load on and off, the system including control means (25, 21, 20; or 25, 23, 22; or 26, 27, 28) adapted for controlling said at least one switching means, **characterised in that** said control means is adapted so that, in response to switching off said power, a direct current is applied to said at least one inductive load and, in response to actuation of said at least one switching means to switch said power on, said power is switched on during a phase of the power which results in a magnetisation of said at least one inductive load opposite to that resulting from said direct current.

2. A system according to claim 1, wherein at least one such inductive load (5) is at said first location.

3. A system according to claim 1 or 2, wherein at least one such inductive load (2) is at said second location.

4. A system according to any preceding claim, wherein at least one such switching means (13 or 24) is at said first location.

5. A system according to any preceding claim, wherein at least one such switching (29) means is at said second location.

6. A system according to any preceding claim, wherein said at least one inductive load comprises a winding of a transformer (5 or 2).

7. A system according to any preceding claim, comprising a power and communication system for a subsea well.

8. A system according to claim 7, wherein said first location is a topside location and said second location comprises a subsea electronics module (SEM).

9. A method for transmitting alternating current power and communication signals between a first location and a second location via a communication path which includes at least one inductive load (5 or 2) and at least one switching means (13 or 24 or 29) for switching power to said at least one load on and off, the method comprising controlling said at least one switching means, the method being **characterised in that**, in response to switching off said power, a direct current is applied to said at least one inductive load and, in response to actuation of said at least one switching means to switch said power on, said power is switched on during a phase of the power which results in a magnetisation of said at least one inductive load opposite to that resulting from said direct current.

10. A method according to claim 9, wherein at least one such inductive load (5) is at said first location.

11. A method according to claim 9 or 10, wherein at least one such inductive load (2) is at said second location.

12. A method according to any of claims 9 to 11, wherein at least one such switching (13 or 24) means is at said first location.

13. A method according to any of claims 9 to 12, wherein at least one such switching means (29) is at said second location.

14. A method according to any of claims 9 to 13, wherein said at least one inductive load comprises a winding of a transformer (5 or 2).

15. A method according to any of claims 9 to 14, performed in a power and communication system for a subsea well.

16. A method according to claim 15, wherein said first location is a topside location and said second location comprises a subsea electronics module (SEM).

## Patentansprüche

1. System zur Übertragung von Wechselstrom und Kommunikationssignalen zwischen einem ersten Ort und einem zweiten Ort über einen Kommunikationsweg, der wenigstens eine induktive Last (5 oder 2) und wenigstens ein Schaltmittel (13 oder 29) zum Ein- und Ausschalten der Stromzufuhr zu der wenigstens einen Last umfasst, wobei das System Steuermittel (25, 21, 20; oder 25, 23, 22; oder 26, 27, 28) umfasst, die zur Steuerung des wenigstens einen Schaltmittels ausgelegt sind, **dadurch gekennzeichnet, dass** das Steuermittel so ausgelegt ist, dass als Reaktion auf das Ausschalten der Stromzufuhr ein Gleichstrom an die wenigstens eine induktive Last angelegt wird und als Reaktion auf die Betätigung des wenigstens einen Schaltmittels zum Einschalten der Stromzufuhr die Stromzufuhr während einer Phase des Stroms eingeschaltet wird, die eine Magnetisierung der wenigstens einen induktiven Last entgegengesetzt zu der durch den Gleichstrom bewirkten zur Folge hat.

2. System nach Anspruch 1, wobei sich wenigstens eine solche induktive Last (5) an dem ersten Ort befindet.

3. System nach Anspruch 1 oder 2, wobei sich wenigstens eine solche induktive Last (2) an dem zweiten Ort befindet.

4. System nach einem vorangehenden Anspruch, wobei sich wenigstens ein solches Schaltmittel (13 oder 24) an dem ersten Ort befindet.

5. System nach einem vorangehenden Anspruch, wobei sich wenigstens ein solches Schaltmittel (29) an dem zweiten Ort befindet.

6. System nach einem vorangehenden Anspruch, wobei die wenigstens eine induktive Last eine Wicklung eines Transformators (5 oder 2) umfasst.

7. System nach einem vorangehenden Anspruch, das ein Stromversorgungs- und Kommunikationssystem für ein unterseeisches Bohrloch umfasst.

8. System nach Anspruch 7, wobei der erste Ort ein Topside-Ort ist und der zweite Ort ein unterseeisches Elektronikmodul (*subsea electronics module, SEM*) umfasst.

9. Verfahren zur Übertragung von Wechselstrom und Kommunikationssignalen zwischen einem ersten Ort und einem zweiten Ort über einen Kommunikationsweg, der wenigstens eine induktive Last (5 oder 2) und wenigstens ein Schaltmittel (13 oder 24 oder 29) zum Ein- und Ausschalten der Stromzufuhr zu der wenigstens einen Last umfasst, wobei das Verfahren die Steuerung des wenigstens einen Schaltmittels umfasst, wobei das Verfahren **dadurch gekennzeichnet ist, dass** als Reaktion auf das Ausschalten der Stromzufuhr ein Gleichstrom an die wenigstens eine induktive Last angelegt wird und als Reaktion auf die Betätigung des wenigstens einen Schaltmittels zum Einschalten der Stromzufuhr die Stromzufuhr während einer Phase des Stroms eingeschaltet wird, die eine Magnetisierung der wenigstens einen induktiven Last entgegengesetzt zu der durch den Gleichstrom bewirkten zur Folge hat.

10. Verfahren nach Anspruch 9, wobei sich wenigstens eine solche induktive Last (5) an dem ersten Ort befindet.

11. Verfahren nach Anspruch 9 oder 10, wobei sich wenigstens eine solche induktive Last (2) an dem zweiten Ort befindet.

12. Verfahren nach einem der Ansprüche 9 bis 11, wobei sich wenigstens ein solches Schaltmittel (13 oder 24) an dem ersten Ort befindet.

13. Verfahren nach einem der Ansprüche 9 bis 12, wobei sich wenigstens ein solches Schaltmittel (29) an dem zweiten Ort befindet.

14. Verfahren nach einem der Ansprüche 9 bis 13, wobei die wenigstens eine induktive Last eine Wicklung eines Transformators (5 oder 2) umfasst.

15. Verfahren nach einem der Ansprüche 9 bis 14, das in einem Stromversorgungs- und Kommunikationssystem für ein unterseeisches Bohrloch durchgeführt wird.

16. Verfahren nach Anspruch 15, wobei der erste Ort ein Topside-Ort ist und der zweite Ort ein unterseeisches Elektronikmodul (*subsea electronics module, SEM*) umfasst.

## Revendications

1. Système de transmission d'alimentation à courant alternatif et de signaux de communication entre un premier emplacement et un second emplacement via une voie de communication qui comprend au moins une charge inductive (5 ou 2), et au moins un moyen de commutation (13 ou 29) pour mettre l'alimentation de ladite au moins une charge sous tension et hors tension, le système comprenant un moyen de commande (25, 21, 20 ; ou 25, 23, 22 ; ou 26, 27, 28) adapté pour commander ledit au moins un moyen de commutation, **caractérisé en ce que** ledit moyen de commande est adapté de sorte que, en réponse à la mise hors tension de ladite alimentation, un courant continu est appliqué à ladite au moins une charge inductive et, en réponse à l'actionnement dudit au moins un moyen de commutation pour mettre ladite alimentation sous tension, ladite alimentation est mise sous tension pendant une phase de l'alimentation qui conduit à une magnétisation de ladite au moins une charge inductive opposée à celle résultant dudit courant continu.

2. Système selon la revendication 1, dans lequel au moins une telle charge inductive (5) est en ledit premier emplacement.

3. Système selon la revendication 1 ou 2, dans lequel ladite au moins une charge inductive (2) est en ledit second emplacement.

4. Système selon l'une quelconque des revendications précédentes, dans lequel ledit au moins un tel moyen de commutation (13 ou 24) est en ledit premier emplacement.

5. Système selon l'une quelconque des revendications précédentes, dans lequel au moins un tel moyen de commutation (29) est en ledit second emplacement.

6. Système selon l'une quelconque des revendications précédentes, dans lequel ladite au moins une charge inductive comprend un enroulement d'un transformateur (5 ou 2).

7. Système selon l'une quelconque des revendications précédentes, comprenant un système d'alimentation et de communication pour un puits sous-marin.

8. Système selon la revendication 7, dans lequel ledit premier emplacement est un emplacement en surface et ledit second emplacement comprend un module d'électronique sous-marine (SEM).

9. Procédé de transmission d'alimentation à courant alternatif et de signaux de communication entre un premier emplacement et un second emplacement via une voie de communication qui comprend au moins une charge inductive (5 ou 2), et au moins un moyen de commutation (13 ou 24 ou 29) pour mettre l'alimentation de ladite au moins une charge sous tension et hors tension, le procédé comprenant la commande dudit au moins un moyen de commutation, le procédé étant **caractérisé en ce que**, en réponse à la mise hors tension de ladite alimentation, un courant continu est appliqué à ladite au moins une charge inductive et, en réponse à l'actionnement dudit au moins un moyen de commutation pour mettre ladite alimentation sous tension, ladite alimentation est mise sous tension pendant une phase de l'alimentation qui conduit à une magnétisation de ladite au moins une charge inductive opposée à celle résultant dudit courant continu.

10. Procédé selon la revendication 9, dans lequel au moins une telle charge inductive (5) est en ledit premier emplacement.

11. Procédé selon la revendication 9 ou 10, dans lequel au moins une telle charge inductive (2) est en ledit second emplacement.

12. Procédé selon l'une quelconque des revendications 9 à 11, dans lequel au moins un tel moyen de commutation (13 ou 24) est en ledit premier emplacement.

13. Procédé selon l'une quelconque des revendications 9 à 12, dans lequel au moins un tel moyen de commutation (29) est en ledit second emplacement.

14. Procédé selon l'une quelconque des revendications 9 à 13, dans lequel ladite au moins une charge inductive comprend un enroulement d'un transformateur (5 ou 2).

15. Procédé selon l'une quelconque des revendications 9 à 14, réalisé dans un système d'alimentation et de communication pour un puits sous-marin.

16. Procédé selon la revendication 15, dans lequel ledit premier emplacement est un emplacement en surface et ledit second emplacement comprend un module d'électronique sous-marine (SEM).
